(19) **Europäisches Patentamt / European Patent Office / Office européen des brevets**

(11) **EP 3 192 964 B1**

(12) **FASCICULE DE BREVET EUROPEEN**

(45) Date de publication et mention
de la délivrance du brevet:
**13.05.2020 Bulletin 2020/20**

(51) Int Cl.:
***E21B 43/00*** *(2006.01)*     ***E21B 49/00*** *(2006.01)*

(21) Numéro de dépôt: **16306686.3**

(22) Date de dépôt: **15.12.2016**

(54) **PROCEDE DE PRODUCTION D'HYDROCARBURES COMPORTANT UN INDEX DE PRODUCTIVITE DES PUITS SOUS EFFET THERMIQUE**

VERFAHREN ZUR PRODUKTION VON KOHLENWASSERSTOFFEN, DAS EINEN PRODUKTIVITÄTSINDEX DER BRUNNEN UNTER WÄRMEEFFEKT UMFASST

METHOD FOR PRODUCING HYDROCARBONS COMPRISING A PRODUCTIVITY INDEX OF WELLS UNDER THERMAL EFFECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2016 FR 1650309**

(43) Date de publication de la demande:
**19.07.2017 Bulletin 2017/29**

(73) Titulaire: **IFP Energies nouvelles**
**92500 Rueil-Malmaison (FR)**

(72) Inventeurs:
- **GUY, Nicolas**
  **75003 PARIS (FR)**
- **PREUX, Christophe**
  **78260 ACHERES (FR)**
- **MALINOUSKAYA, Iryna**
  **78290 CROISSY SUR SEINE (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2010/039566**

- S Zandi ET AL: "Numerical Coupling of Geomechanics and Fluid Flow during Steam Injection in SAGD", IEA Collaborative Project on Enhanced Oil Recovery 32 nd Annual Workshop and Symposium, 17 octobre 2011 (2011-10-17), pages 1-12, XP055307175, Extrait de l'Internet: URL:http://iea-eor.ptrc.ca/2011/assets/17_18-10-2011_10-45_Paper.pdf [extrait le 2016-10-03]
- Olivier Lerat ET AL: "Modelling of 4D Seismic Data for the Monitoring of Steam Chamber Growth During the SAGD Process", Journal of Canadian Petroleum Technology, 1 juin 2010 (2010-06-01), pages 21-30, XP055307173, DOI: 10.2118/138401-PA Extrait de l'Internet: URL:http://www.searchanddiscovery.com/documents/2014/41380bathellier/ndx_bathellier. pdf [extrait le 2016-10-03]
- P M Collins ET AL: "Geomechanical and thermal reservoir simulation demonstrates SAGD enhancement due to shear dilation", SPE/ISRM 782371, 20 octobre 2002 (2002-10-20), pages 1-7, XP055307183, Extrait de l'Internet: URL:http://www.petroleumgeomechanics.com/papers/SPE-ISRM%2078237.pdf [extrait le 2016-10-03]

EP 3 192 964 B1

**Description**

La présente invention concerne le domaine de l'exploitation de milieux souterrains traversés par des puits forés, et en particulier l'exploitation de gisements souterrains contenant des hydrocarbures.

Pour exploiter au mieux les milieux souterrains, les industries pétrolières définissent des modèles numériques des zones réservoirs afin de piloter le processus d'exploitation des champs pétroliers. Le procédé de production selon l'invention met en œuvre un modèle optimisé du point de vue de la détermination des indices, ou index, de productivité.

La technique qui consiste à prendre en compte les effets thermiques au niveau de la perméabilité prise en compte dans les modèles de réservoir, en mettant à jour ladite perméabilité en fonction de la pression, température, variation de la porosité et de contraintes volumiques est connue. D'ailleurs, une telle technique a été proposée par Ojagbohunmi *et al.* (2012) où la perméabilité est fonction de la porosité, qui est elle-même fonction de la pression et de la température (Tran *et al.,* 2004).

D'autre part, il existe des méthodes de calcul des indices de productivité des puits (IP). En particulier, ces indices de productivité peuvent être estimés en fonction de la perméabilité des mailles sous-jacentes par les méthodes de Peaceman (1983) ou Mochizuki (1995) pour ne citer que les plus connues.

- S. Ojagbohunmi, R. Chalaturnyk, J. Leung, Coupling of stress dependent relative permeability and reservoir simulation. SPE 154083, 2012.
- D. Tran, A. Settari, L. Nghiem, New iterative coupling between a reservoir simulator and a geomechanics module. SPE 2004.
- D.W. Peaceman, Interpretation of well-block pressures in numerical reservoir simulation with nonsquare grid blocks and anisotropic permeability. SPE, 1983.
- S. Mochizuki, Well productivity for arbitrarily inclined well. SPE 029133, 1995.

Dans la littérature, on trouve des méthodes qui combinent les deux techniques et prennent en compte les effets de la pression sur les indices de productivité, en les faisant dépendre de la perméabilité, dépendante de la porosité, elle-même fonction de la pression.

Toutefois, on ne trouve pas dans la littérature de méthode où les index de productivité des puits sont fonction de la perméabilité qui serait elle-même fonction de la pression, et aussi plus particulièrement de la température. En effet, la porosité n'est généralement pas dépendante de la température. Cela sous-entend que dans tous les cas, si les effets thermiques peuvent être pris en compte dans la perméabilité au niveau du champ, ils ne sont pas pris en compte spécifiquement au niveau des puits forés, ce qui induit une importante incertitude sur la production d'hydrocarbures des puits par l'intermédiaire du calcul de l'index de production IP. Le document S. Zandi, G.Renard, J-F. Nauroy, N. Guy, M.Tijani "Numerical coupling of geomechanics and fluid flow during steam injection in SAGD", 17-19 Octobre 2011, décrit un procédé de simulation numérique d'un procédé SAGD.

La présente invention propose de remédier à ce problème. Cette invention prend mieux en compte les effets thermiques, et plus particulièrement les effets thermiques dans l'environnement des puits. En intégrant ces effets thermiques pour la détermination d'indices de productivité des puits, on peut obtenir un modèle de réservoir plus précis et aboutir à des résultats, et des estimations de production plus proches de la réalité.

Ainsi la présente invention concerne un procédé de production d'hydrocarbures contenus dans une formation souterraine traversée par au moins un puits. Pour ce procédé, on réalise les étapes suivantes :

- on construit à l'aide d'un ordinateur un modèle numérique de ladite formation souterraine comportant un maillage, et prenant en compte au moins des données pétrophysiques appliquées aux mailles, et les caractéristiques d'au moins un puits traversant ladite formation souterraine,
- on détermine une fonction de dépendances en pression et température des perméabilités prises en compte dans ledit modèle,
- on détermine un modèle d'indice de productivité fonction de la perméabilité desdites mailles,
- on détermine pour au moins une maille dudit modèle un indice de productivité en dépendance de la pression et de la température, en prenant en compte lesdites fonctions de dépendances en pression et température des perméabilités, ainsi que ledit modèle d'indice de productivité, et - on exploite ladite formation souterraine en fonction dudit indice de productivité.

Selon l'invention, lesdites fonctions de dépendances en pression et température des perméabilités prises en compte dans ledit modèle comportent des multiplicateurs de perméabilité $Mult_i(T,P)$.

Conformément à un mode de réalisation de l'invention, lesdits multiplicateurs sont déterminés en utilisant les modifications de la porosité en fonction de la température et la pression.

Selon l'invention, le calcul de l'indice de productivité est effectué selon :

$$IP\left(\mathbf{K}_{e\!f\!f}\right)=\frac{2\pi\sqrt{K_{e\!f\!f}^{x}K_{e\!f\!f}^{y}}\,h}{\ln\!\left(\frac{r_0}{r_w}\right)+s}$$

avec l'épaisseur perpendiculaire à l'écoulement $h$, rayon de puits $r_w$, rayon de drainage $r_0$ et skin factor $s$.

Selon un mode de réalisation de l'invention, le procédé est appliqué à un procédé de drainage thermique.

Avantageusement, on peut déterminer l'indice de productivité pour les mailles dudit modèle numérique impactés par ledit puits.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur faisant partie de l'exploitation d'une formation souterraine.

L'invention sera mieux comprise à la lecture qui suit de la description et d'un exemple, nullement limitatif, et illustré par les figures ci-après annexées, notamment :

- la figure 1 montre les courbes de production cumulée en fonction du temps dans les trois cas suivant : - sans les effets géomécaniques, - avec effet de la pression seul sur les perméabilités et sur l'*IP*, - avec les effets thermiques et de pression sur les perméabilités et sur l'*IP* ;
- les figures 2a et 2b donnent les débits de production pour les mêmes trois cas et leurs cumuls de production.

La présente invention concerne le domaine de l'exploitation de milieux souterrains. Cette invention permet de mieux prendre en compte les effets thermiques et plus particulièrement les effets thermiques proches puits en intégrant ces effets aux index de productivité IP des puits. Cela permet donc d'obtenir un modèle de réservoir plus précis. En particulier, cette invention permet d'obtenir des résultats de production plus précis.

On rappelle qu'un indice (ou index) de productivité IP définit la capacité de production d'un puits. Cet indice de productivité peut permettre de prévoir l'équipement d'un puits pour un débit déterminé ou la perte de charge qu'il faut imposer à un puits.

Afin d'exploiter au mieux les milieux souterrains, les industries pétrolières définissent des modèles numériques permettant de mieux piloter et exploiter les champs pétroliers.

La première étape de ces études d'exploitation consiste à créer un modèle numérique qui représente au mieux les données géologiques et pétrophysiques du milieu poreux, par exemple les facies, les perméabilités, ou les porosités de la roche réservoir. On définit aussi dans ce modèle, la position des puits forés ainsi que leur mode de fonctionnement : débit, pression, fluides injectés, nature des produits injectés,...

La deuxième étape consiste à définir les effets thermiques. Classiquement, on ajoute aux perméabilités des dépendances en température et pression : $K(T,P)$. Afin de ne pas devoir changer les perméabilités définies à l'étape première, on prend en compte les effets thermiques en définissant un multiplicateur de perméabilité $Mult(T,P)$ afin d'avoir une perméabilité effective $K_{eff}(T,P) = Mult(T,P) * K(T,P)$. De cette manière les effets thermiques sont pris en compte sur toutes les mailles du modèle, mais ne sont pas pris en compte sur les index de productivité des puits. Les facteurs $Mult(T, P)$ peuvent être obtenus par des lois physiques ou empiriques, par exemple comme selon Touhidi-Baghini (1998).

-Touhidi-Baghini, A.: "Absolute Permeability of McMurray Formation Oil Sands at Low Confining Stress, Departement of Civil and Environmental Engineering, University of Alberta, Ph.D. Dissertation, 1998

La présente invention permet de prendre en compte ces effets sur les indices de productivité (IP) en choisissant tout d'abord une méthode de calcul d'IP fonction de la perméabilité, par exemple, la méthode connue de « Peaceman », ou la méthode de projection (basée sur la méthode de « Peaceman »), ou autre. En effet, physiquement, la perméabilité de la maille perforée par un puits a obligatoirement un impact sur l'indice de productivité du puits.

On calcule alors les indices de productivité des puits $IP(T,P)$ pour au moins une maille, et de préférence pour chaque maille perforée par les puits en utilisant la perméabilité mise à jour dans la deuxième étape : $K_{eff}(T,P)$, c'est-à-dire en tenant compte du multiplicateur de perméabilité, ou de la dépendance en température et pression de la perméabilité.

La méthode de « Peaceman » citée plus haut peut notamment être retrouvée décrite dans les documents suivants :

- Peaceman, D.W.: "Interpretation of Well-Block Pressures in Numerical Reservoir Simulation", paper SPE 6893, presented at the SPE-AIME 52nd Annual Fall Technical Conference and Exhibition, Denver, Oct 9-12, 1977
- Peaceman, D.W.: "Interpretation of Well-Block Pressures in Numerical Reservoir Simulation With Nonsquare Grid Blocks and Anisotropic Permeability", paper SPE 10528, presented at the 1982 SPE Symposium on Reservoir Simulation, New Orleans, Jan 31-Feb 3

- Peaceman, D.W.: "Interpretation of Wellblock Pressures in Numerical Reservoir Simulation: Part3 - Off-Center and Multiple Wells Within a Wellblock", paper SPE 16976, presented at the 1987 SPE Annual Technical Conference and Exhibition, Dallas, Sept 27-30

Selon la présente invention, le procédé de production d'hydrocarbures contenus dans une formation souterraine, par exemple une roche réservoir, traversée par au moins un puits foré consiste en une méthode comportant les cinq étapes suivantes :

1 Génération d'un modèle numérique du réservoir ;
2 Définition des dépendances en température de la perméabilité ;
3 Choix d'une modèle des indices de productivité des puits avec dépendance à la perméabilité de la maille perforée ;
4 Calcul des indices de productivité des puits en utilisant les perméabilités dépendantes de la température obtenues à l'étape 2 ;
5 Exploitation du réservoir

1) Génération d'un modèle géologique fin.

Cette première étape consiste à construire à l'aide d'un ordinateur et d'un logiciel de modélisation, un modèle de réservoir comprenant un maillage, des propriétés pétrophysiques appliquées aux mailles, ainsi que des positions et trajectoires des puits. Ainsi, le modèle de réservoir représente la formation souterraine. Les propriétés physiques peuvent comprendre notamment la perméabilité et porosité.

2) Définition des dépendances en pression et température de la perméabilité.

La deuxième étape consiste à définir les effets thermiques. Classiquement, on ajoute aux perméabilités des dépendances en température et pression : $K_i(T,P)$ ou i représente la direction (x, y ou z). La perméabilité $K_i(T,P)$ est obtenue dans le modèle de réservoir construit à l'étape précédente.
Selon l'invention, afin de modifier les perméabilités initiales définies à l'étape 1 dans le modèle géologique, on prend en compte les effets thermiques en introduisant un multiplicateur de perméabilité $Mult_i(T,P)$ afin d'avoir une perméabilité effective $K_{eff}(T,P) = Mult_i(T,P) * K_i$.
Conformément à une variante de réalisation de l'invention, les facteurs $Mult(T, P)$ peuvent être obtenus par des lois physiques ou empiriques (par exemple Touhidi-Baghini (1998)).
Selon une variante de réalisation de l'invention, les facteurs $Mult(T, P)$ peuvent être obtenus au moyen d'un simulateur de réservoir, par exemple le logiciel PumaFlow ® (IFP Energies nouvelles, France).

3) Choix d'un modèle des indices de productivité des puits avec dépendance à la perméabilité de la maille perforée.

Lors de cette étape on détermine une relation (appelé également modèle ou méthode de calcul) entre les indices de productivité et la perméabilité. On fait le choix d'un modèle faisant intervenir la perméabilité dite effective.
Selon l'invention, l'indice de productivité pour un puits vertical est estimé par la formule de Peaceman :

$$IP(\mathbf{K}_{eff}) = \frac{2\pi\sqrt{K_{eff}^x K_{eff}^y}\, h}{\ln\left(\frac{r_0}{r_w}\right) + s} \qquad (1)$$

Avec : l'épaisseur perpendiculaire à l'écoulement $h$, rayon de puits $r_w$, rayon de drainage $r_0$ et « skin factor » (qui est un facteur sans dimension qui traduit les pertes de charge engendrées par une restriction de débit à proximité des puits) $s$.
On remarque que $r_0$ est une fonction de la perméabilité :

$$r_0 = 0.28\frac{\left[\left(\frac{K_{eff}^x}{K_{eff}^y}\right)^{1/2}\Delta x^2 + \left(\frac{K_{eff}^y}{K_{eff}^x}\right)^{1/2}\Delta y^2\right]^{1/2}}{\left(\frac{K_{eff}^y}{K_{eff}^x}\right)^{1/4} + \left(\frac{K_{eff}^x}{K_{eff}^y}\right)^{1/4}} \qquad (2)$$

4) Calcul des indices de productivité des puits en utilisant les perméabilités dépendantes de T et P obtenues à l'étape 2.

On calcule alors au moins un indice de productivité des puits $IP(T,P)$ pour au moins une maille du modèle de réservoir, et de préférence pour chaque maille du modèle de réservoir perforée par le(s) puits en utilisant les perméabilités effectives mises à jour dans l'étape 2 : $K_{eff}^x(T,P)$ et $K_{eff}^y(T,P)$, c'est-à-dire en tenant compte du multiplicateur de perméabilité, ou plus généralement de la fonction de dépendance en pression et température de la perméabilité. Si f(x,....) représente la formule utilisée pour calculer l'$IP$, alors :

$$IP(T,P) = f(K_{eff}^x(T,P), K_{eff}^y(T,P) \ ....)$$

En utilisant les formules de « Peaceman » (1, 2) et l'expression de $K_{eff}(T,P)$, on obtient l'indice de productivité en fonction de T et $P$

$$IP(T,P) = \frac{2\pi h}{\ln\left(\frac{r_0^*}{r_w}\right) + s} \sqrt{Mult_x(T,P) * K_{eff}^x * Mult_y(T,P) * K_{eff}^y}$$

avec $r_0^*$ :

$$r_0^* = 0.28 \frac{\sqrt{Mult_y(T,P) * K_{eff}^y \Delta x^2 + Mult_x(T,P) * K_{eff}^x \Delta y^2}}{\sqrt{Mult_y(T,P) * K_{eff}^y} + \sqrt{Mult_x(T,P) * K_{eff}^x}}$$

La présente invention est basée sur la prise en compte des effets thermiques sur les index de productivité des puits en tenant compte des effets thermiques sur la perméabilité par l'exhibition du multiplicateur de perméabilité dans la formule d'IP.

5) Exploitation du réservoir

Lors de cette étape, on exploite la formation souterraine, c'est-à-dire on produit des hydrocarbures, en fonction des indices de productivité de puits déterminés à l'étape précédente.

Selon un mode de réalisation de l'invention, à partir des indices de productivité des puits, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés... Ces schémas de production peuvent être simulés au moyen d'un simulateur d'écoulement et du modèle de réservoir.

A partir des indices de productivité des puits, et des éventuelles simulations d'écoulement, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable.
- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés...

L'invention concerne par ailleurs un produit programme d'ordinateur téléchargeable depuis un réseau de communication et/ou enregistré sur un support lisible par ordinateur et/ou exécutable par un processeur. Ce programme comprend des instructions de code de programme pour la mise en œuvre du procédé tel que décrit ci-dessus, lorsque le programme est exécuté sur un ordinateur faisant partie du processus d'exploitation d'une formation souterraine.

**Exemples**

Afin de montrer l'intérêt de cette méthode pour la simulation de production, on l'applique sur un cas simplifié de production de réservoir.

On utilise un modèle de simulation de SAGD (Steam-assisted gravity drainage) avec un puits producteur et un puits injecteur. D'abord, on préchauffe les puits fermés, ensuite on ouvre les puits pour équilibrer la pression. On injecte la vapeur dans le puits injecteur et on observe la production d'huile dans le puits producteur. Les variations de la température et de la pression sont très importantes dans ce processus ce qui permettra de mettre en évidence leurs rôles dans les effets géomécaniques.

On va démontrer l'influence de la prise en compte de la variation de perméabilité avec la température et la pression sur la production. Pour cela on compare des résultats des simulations :

- sans les effets géomécaniques, selon l'art antérieur (noté AA),
- seulement avec les effets de la pression sur les perméabilités et sur l'*IP,* selon l'art antérieur (noté $K_{eff}(P)$ et $IP(P)$) ; et
- avec les effets thermiques et de pression sur les perméabilités et sur l'*IP* selon l'invention (noté $K_{eff}(T,P)$ et $IP(T,P)$).

Les perméabilités initiales sont $K_x$ = $K_y$ = 2000 mD et $K_z$ =1000 mD. Les multiplicateurs sont calculés en utilisant les modifications de la porosité en fonction de la température et la pression

$$\phi = \phi_0 \exp\left\{c_p\left(P - P_0\right) + c_T\left(T - T_0\right)\right\}$$

et en utilisant une approximation de la loi empirique de Touhidi-Baghini (1998) où $\phi_0$, $T_0$ et $p_0$ sont respectivement : la porosité, la température et la pression initiales, $c_p$ compressibilité de roche, $c_T$ expansion thermique

$$Mult_i\left(P,T\right) = \frac{K_i^{eff}}{K_i} = \exp\left(\frac{c_i \times \varepsilon_v}{\phi_0}\right)$$

avec i désignant l'un des axes x, y et z, et $c_X = c_Y = 2$, $c_Z = 5$ , et
avec $c_x$, $c_y$ et $c_z$ paramètres du matériau et $\varepsilon_v$ une contrainte volumique calculée en considérant les variations de la porosité ainsi que de la température, $\varepsilon_v = \phi_0 c_p(P-P_0) + 3\alpha_d(T-T_0)$ avec $\alpha_d$ coefficient d'expansion thermique drainée.

Leurs valeurs sont données dans les tableaux 1 et 2, les multiplicateurs sont dépendants de la direction considérée horizontale ou verticale. Pour cet exemple illustratif et non limitatif, les facteurs *Mult(T, P)* sont obtenus par des lois physiques ou empiriques, telles que décrites dans le document Touhidi-Baghini (1998).

- Touhidi-Baghini, A.: "Absolute Permeability of McMurray Formation Oil Sands at Low Confining Stress, Departement of Civil and Environmental Engineering, University of Alberta, Ph.D. Dissertation, 1998

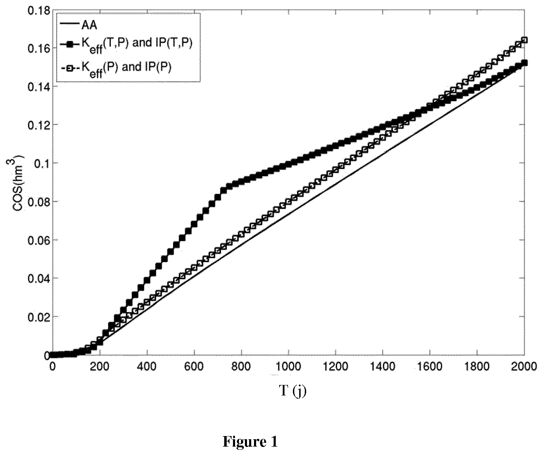

La figure 1 montre les courbes de production cumulée d'huile (COS) en fonction du temps (T) pour tous ces cas.

En considérant une perméabilité et des IP variables en fonction de la température et de la pression, $K_{eff}(T,P)$ et *IP(T,P)*, par la méthode selon l'invention définie ci-dessus (courbe (-■-)), on obtient l'estimation de la production significativement différente par rapport au cas sans les effets thermiques $K_{eff}(P)$ et $IP(P)$ (courbe (--□--)) selon l'art antérieur. Dans un premier temps, l'effet de la hausse de la température augmente les perméabilités et les IP. Ce qui amène à produire plus rapidement que dans la cas sans effet de la température. L'huile étant produite plus rapidement, on assiste à une baisse de production après 700 jours.

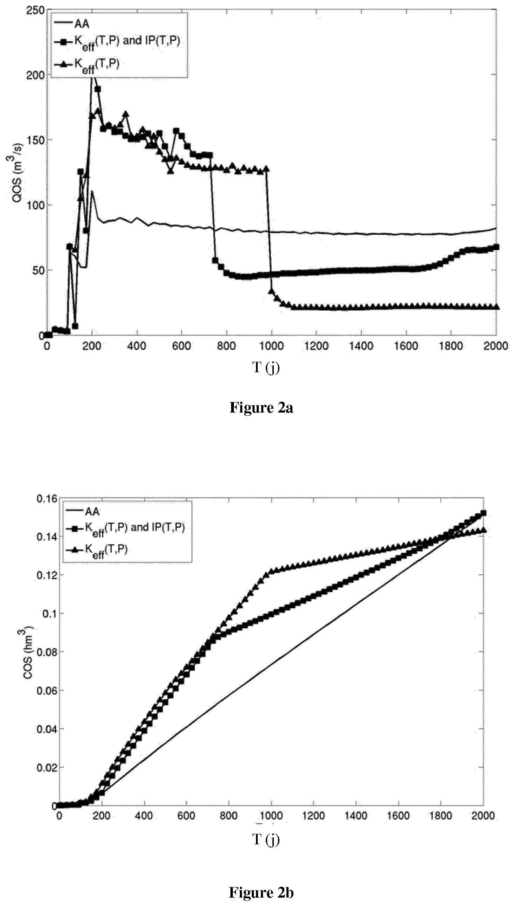

La figure 2a montre le débit d'huile en surface en fonction du temps. On observe que la prise en compte des effets géomécaniques pour les indices de productivité influence le débit d'huile dans le puits producteur. En conséquence, la production d'huile cumulée (COS) à la fin de période est modifié (figure 2b). En effet, la température a tendance à augmenter la perméabilité du milieu, par exemple, par l'activation de micro-fractures et par voie de conséquence, elle augmente aussi la valeur de l'index de productivité. La prise en comptes des IP thermique (courbe $K_{eff}(T,P)$ et $IP(T,P)$) selon l'invention accélère l'arrivée d'eau au producteur, et donc une chute de la productivité d'huile (Figure 2a) aux alentours de 750 jours. Sur la figure 2b, on remarque que la chute de productivité d'huile arrive plus tôt si l'on tient compte des effets thermiques sur les IPs. Ainsi, les *IP(T,P)* obtenus selon cette présente invention permettent de mieux estimer la production et d'optimiser un procédé de production. En conséquence, il est important de tenir compte des variations d'*IP* provoquées par des variations de température pour bien estimer la production, notamment dans les cas où la température change significativement.

**Tableau 1 : Multiplicateurs $Mult_{x,y}(T,P)$ définies pour la pression P (col) et la température T (lignes)**

| P (bar) \ T(°C) | 0 | 5 | 10 | 15 | 20 | 25 | 30 | 35 | 40 | 45 | 50 | 55 | 60 |
|---|---|---|---|---|---|---|---|---|---|---|---|---|---|
| 0 | 0.9418 | 0.9512 | 0.9608 | 0.9704 | 0.9802 | 0.9900 | 1.0000 | 1.0101 | 1.0202 | 1.0305 | 1.0408 | 1.0513 | 1.0618 |
| 25 | 0.9656 | 0.9753 | 0.9851 | 0.9950 | 1.0050 | 1.0151 | 1.0253 | 1.0356 | 1.0460 | 1.0565 | 1.0672 | 1.0779 | 1.0887 |
| 50 | 0.9900 | 1.0000 | 1.0101 | 1.0202 | 1.0305 | 1.0408 | 1.0513 | 1.0618 | 1.0725 | 1.0833 | 1.0942 | 1.1052 | 1.1163 |
| 75 | 1.0151 | 1.0253 | 1.0356 | 1.0460 | 1.0565 | 1.0672 | 1.0779 | 1.0887 | 1.0997 | 1.1107 | 1.1219 | 1.1331 | 1.1445 |
| 100 | 1.0408 | 1.0513 | 1.0618 | 1.0725 | 1.0833 | 1.0942 | 1.1052 | 1.1163 | 1.1275 | 1.1388 | 1.1503 | 1.1618 | 1.1735 |
| 125 | 1.0672 | 1.0779 | 1.0887 | 1.0997 | 1.1107 | 1.1219 | 1.1331 | 1.1445 | 1.1560 | 1.1677 | 1.1794 | 1.1912 | 1.2032 |
| 150 | 1.0942 | 1.1052 | 1.1163 | 1.1275 | 1.1388 | 1.1503 | 1.1618 | 1.1735 | 1.1853 | 1.1972 | 1.2092 | 1.2214 | 1.2337 |
| 175 | 1.1219 | 1.1331 | 1.1445 | 1.1560 | 1.1677 | 1.1794 | 1.1912 | 1.2032 | 1.2153 | 1.2275 | 1.2399 | 1.2523 | 1.2649 |
| 200 | 1.1503 | 1.1618 | 1.1735 | 1.1853 | 1.1972 | 1.2092 | 1.2214 | 1.2337 | 1.2461 | 1.2586 | 1.2712 | 1.2840 | 1.2969 |
| 225 | 1.1794 | 1.1912 | 1.2032 | 1.2153 | 1.2275 | 1.2399 | 1.2523 | 1.2649 | 1.2776 | 1.2905 | 1.3034 | 1.3165 | 1.3298 |
| 250 | 1.2092 | 1.2214 | 1.2337 | 1.2461 | 1.2586 | 1.2712 | 1.2840 | 1.2969 | 1.3100 | 1.3231 | 1.3364 | 1.3499 | 1.3634 |
| 275 | 1.2399 | 1.2523 | 1.2649 | 1.2776 | 1.2905 | 1.3034 | 1.3165 | 1.3298 | 1.3431 | 1.3566 | 1.3703 | 1.3840 | 1.3979 |
| 300 | 1.2712 | 1.2840 | 1.2969 | 1.3100 | 1.3231 | 1.3364 | 1.3499 | 1.3634 | 1.3771 | 1.3910 | 1.4049 | 1.4191 | 1.4333 |

**Tableau 2 : Multiplicateurs $Mult_z(T,P)$ définies pour la pression P (col) et la température T**

| P (bar) \ T(°C) | 0 | 5 | 10 | 15 | 20 | 25 | 30 | 35 | 40 | 45 | 50 | 55 | 60 |
|---|---|---|---|---|---|---|---|---|---|---|---|---|---|
| 0 | 0.8607 | 0.8825 | 0.9048 | 0.9277 | 0.9512 | 0.9753 | 1.0000 | 1.0253 | 1.0513 | 1.0779 | 1.1052 | 1.1331 | 1.1618 |
| 25 | 0.9162 | 0.9394 | 0.9632 | 0.9876 | 1.0126 | 1.0382 | 1.0645 | 1.0914 | 1.1191 | 1.1474 | 1.1764 | 1.2062 | 1.2368 |
| 50 | 0.9753 | 1.0000 | 1.0253 | 1.0513 | 1.0779 | 1.1052 | 1.1331 | 1.1618 | 1.1912 | 1.2214 | 1.2523 | 1.2840 | 1.3165 |
| 75 | 1.0382 | 1.0645 | 1.0914 | 1.1191 | 1.1474 | 1.1764 | 1.2062 | 1.2368 | 1.2681 | 1.3002 | 1.3331 | 1.3668 | 1.4014 |
| 100 | 1.1052 | 1.1331 | 1.1618 | 1.1912 | 1.2214 | 1.2523 | 1.2840 | 1.3165 | 1.3499 | 1.3840 | 1.4191 | 1.4550 | 1.4918 |
| 125 | 1.1764 | 1.2062 | 1.2368 | 1.2681 | 1.3001 | 1.3331 | 1.3668 | 1.4014 | 1.4369 | 1.4733 | 1.5106 | 1.5488 | 1.5880 |
| 150 | 1.2523 | 1.2840 | 1.3165 | 1.3499 | 1.3840 | 1.4191 | 1.4550 | 1.4918 | 1.5296 | 1.5683 | 1.6080 | 1.6487 | 1.6905 |
| 175 | 1.3331 | 1.3668 | 1.4014 | 1.4369 | 1.4733 | 1.5106 | 1.5488 | 1.5880 | 1.6282 | 1.6695 | 1.7117 | 1.7551 | 1.7995 |
| 200 | 1.4191 | 1.4550 | 1.4918 | 1.5296 | 1.5683 | 1.6080 | 1.6487 | 1.6905 | 1.7333 | 1.7771 | 1.8221 | 1.8682 | 1.9155 |
| 225 | 1.5106 | 1.5488 | 1.5880 | 1.6286 | 1.6695 | 1.7117 | 1.7551 | 1.7995 | 1.8450 | 1.8917 | 1.9396 | 1.9887 | 2.0391 |
| 250 | 1.6080 | 1.6487 | 1.6905 | 1.7333 | 1.7771 | 1.8221 | 1.8682 | 1.9155 | 1.9640 | 2.0138 | 2.0647 | 2.11700 | 2.1706 |
| 275 | 1.7117 | 1.7551 | 1.7995 | 1.8450 | 1.8917 | 1.9396 | 1.9887 | 2.0391 | 2.0907 | 2.1436 | 2.1979 | 2.2535 | 2.3106 |
| 300 | 1.8221 | 1.8682 | 1.9155 | 1.9640 | 2.0138 | 2.0647 | 2.1170 | 2.1706 | 2.2255 | 2.2819 | 2.3396 | 2.3989 | 2.4596 |

**EP 3 192 964 B1**

**Revendications**

1. Procédé de production d'hydrocarbures contenus dans une formation souterraine traversée par au moins un puits, **caractérisé en ce qu'**on réalise les étapes suivantes :

   - on construit à l'aide d'un ordinateur un modèle numérique de ladite formation souterraine comportant un maillage, et prenant en compte au moins des données pétrophysiques appliquées aux mailles, et les caractéristiques d'au moins un puits traversant ladite formation souterraine,- on détermine une fonction de dépendances en pression et température des perméabilités prises en compte dans ledit modèle, ladite fonction de dépendances en pression et température des perméabilités prise en compte dans ledit modèle comportant des multiplicateurs de perméabilité $Mult_i(T,P)$, afin d'avoir une perméabilité effective $K_{eff}^i(T,P) = Mult_i(T,P) *$ $K_i$, Ki étant obtenu dans le modèle numérique construit à l'étape précédente,
   - on détermine un modèle d'indice de productivité fonction de la perméabilité desdites mailles, selon :

$$IP(\mathbf{K}_{eff}) = \frac{2\pi\sqrt{K_{eff}^x K_{eff}^y}\, h}{\ln\left(\frac{r_0}{r_w}\right) + s}$$

   avec l'épaisseur perpendiculaire à l'écoulement **$h$**, rayon de puits **$r_w$**, rayon de drainage **$r_0$** et skin factor **$s$**,
   - on détermine pour au moins une maille dudit modèle un indice de productivité en dépendance de la pression et de la température, en prenant en compte lesdites fonctions de dépendances en pression et température des perméabilités, ainsi que ledit modèle d'indice de productivité, et
   - on exploite ladite formation souterraine en fonction dudit indice de productivité.

2. Procédé de production d'hydrocarbures selon la revendication 1, dans lequel lesdits multiplicateurs sont déterminés en utilisant les modifications de la porosité en fonction de la température et la pression.

3. Procédé de production d'hydrocarbures selon l'une des revendications 1 ou 2, appliqué à un procédé de drainage thermique.

4. Procédé de production d'hydrocarbures selon l'une des revendications précédentes, dans lequel on détermine l'indice de productivité pour les mailles dudit modèle numérique impactés par ledit puits.

5. Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur faisant partie du processus d'exploitation d'une formation souterraine.

**Patentansprüche**

1. Verfahren zur Produktion von Kohlenwasserstoffen, die in einer von mindestens einem Bohrbrunnen durchquerten unterirdischen Formation enthalten sind, **dadurch gekennzeichnet, dass** die folgenden Schritte durchgeführt werden:

   - mit Hilfe eines Computers wird ein digitales Modell der unterirdischen Formation konstruiert, das ein Gitter aufweist und mindestens an die Maschen angewendete petrophysikalische Daten und die Merkmale mindestens eines die unterirdische Formation durchquerenden Bohrbrunnens berücksichtigt,
   - eine Funktion von Druck- und Temperatur-Abhängigkeiten der in dem Modell berücksichtigten Permeabilitäten wird bestimmt, wobei die im Modell berücksichtigte Funktion von Druck- und Temperatur-Abhängigkeiten der Permeabilitäten Permeabilitäts-Multiplikatoren $Mult_i(T,P)$ aufweist, um eine effektive Permeabilität $K_{eff}^i(T,P) = Mult_i(T,P) * K_i$ zu haben, wobei Ki in dem im vorhergehenden Schritt konstruierten digitalen Modell erhalten wird,
   - ein Produktivitätsindex-Modell abhängig von der Permeabilität der Maschen wird bestimmt, gemäß:

9

$$IP\left(K_{eff}\right) = \frac{2\pi \sqrt{K_{eff}^{x} K_{eff}^{y}} h}{In\left(\frac{r_0}{\gamma_w}\right) + s}$$

mit der Dicke lotrecht zur Strömung h, Bohrbrunnenradius $r_w$, Drainageradius $r_0$ und Skinfaktor s,
- für mindestens eine Masche des Modells wird ein Produktivitätsindex abhängig vom Druck und von der Temperatur bestimmt, indem die Funktionen von Druck- und Temperatur-Abhängigkeiten der Permeabilitäten sowie das Produktivitätsindexmodell berücksichtigt werden, und
- die unterirdische Formation wird abhängig vom Produktivitätsindex abgebaut.

2. Verfahren zur Produktion von Kohlenwasserstoffen nach Anspruch 1, wobei die Multiplikatoren unter Verwendung der Veränderungen der Porosität abhängig von der Temperatur und vom Druck bestimmt werden.

3. Verfahren zur Produktion von Kohlenwasserstoffen nach einem der Ansprüche 1 oder 2, das an ein thermisches Drainageverfahren angewendet wird.

4. Verfahren zur Produktion von Kohlenwasserstoffen nach einem der vorhergehenden Ansprüche, wobei der Produktivitätsindex für die Maschen des digitalen Modells bestimmt wird, die vom Bohrbrunnen beeinflusst werden.

5. Computerprogrammprodukt, das von einem Kommunikationsnetzwerk heruntergeladen und/oder auf einem computerlesbaren Träger gespeichert und/oder von einem Prozessor ausgeführt werden kann, das Programmcodeanweisungen zur Durchführung des Verfahrens nach einem der vorhergehenden Ansprüche enthält, wenn das Programm auf einem Computer ausgeführt wird, der Teil des Abbauprozesses einer unterirdischen Formation ist.

**Claims**

1. Production method for hydrocarbons contained in an underground formation passed through by at least one well, **characterized in that** the following steps are carried out:

   - a computer is used to construct a numerical model of said underground formation comprising a meshing, and by taking into account at least petrophysical data applied to the meshes, and the characteristics of at least one well passing through said underground formation,
   - a function of pressure and temperature dependencies of the permeabilities taken into account in said model is determined, said function of pressure and temperature dependencies of the permeabilities taken into account in said model comprising permeability multipliers $Mult_i(T,P)$, in order to have an effective permeability $K_{eff}^{i}(T,P) = Mult_i(T,P) * K_i$, Ki being obtained in the numerical model constructed in the preceding step,
   - a model of productivity index as a function of the permeability of said meshes is determined, according to:

$$IP\left(\mathbf{K}_{eff}\right) = \frac{2\pi \sqrt{K_{eff}^{x} K_{eff}^{y}} h}{\ln\left(\frac{r_0}{r_w}\right) + s}$$

   with the thickness perpendicular to the flow **h**, well radius $r_w$, drainage radius $r_0$ and skin factor **s**,
   - for at least one mesh of said model, a pressure and temperature dependent productivity index is determined, by taking into account said functions of pressure and temperature dependencies of the permeabilities, and said productivity index model, and
   - said underground formation is exploited as a function of said productivity index.

2. Hydrocarbon production method according to Claim 1, in which said multipliers are determined by using the modifications of the porosity as a function of temperature and pressure.

3. Hydrocarbon production method according to either of Claims 1 and 2, applied to a thermal drainage method.

**4.** Hydrocarbon production method according to one of the preceding claims, in which the productivity index is determined for the meshes of said numerical model affected by said well.

**5.** Computer program product that can be downloaded from a communication network and/or stored on a computer-readable medium and/or that can be executed by a processor, comprising program code instructions for implementing the method according to one of the preceding claims, when said program is run on a computer which forms part of the process of exploitation of an underground formation.

**Figure 1**

**Figure 2a**

**Figure 2b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. OJAGBOHUNMI ; R. CHALATURNYK ; J. LEUNG.** Coupling of stress dependent relative permeability and reservoir simulation. *SPE 154083,* 2012
- **D. TRAN ; A. SETTARI ; L. NGHIEM.** New iterative coupling between a reservoir simulator and a geomechanics module. *SPE,* 2004
- **D.W. PEACEMAN.** Interpretation of well-block pressures in numerical reservoir simulation with nonsquare grid blocks and anisotropic permeability. *SPE,* 1983
- **S. MOCHIZUKI.** Well productivity for arbitrarily inclined well. *SPE 029133,* 1995
- **S. ZANDI ; G.RENARD ; J-F. NAUROY ; N. GUY ; M.TIJANI.** *Numerical coupling of geomechanics and fluid flow during steam injection in SAGD,* 17 Octobre 2011
- **TOUHIDI-BAGHINI, A.** Absolute Permeability of Mc-Murray Formation Oil Sands at Low Confining Stress. *Departement of Civil and Environmental Engineering, University of Alberta, Ph.D. Dissertation,* 1998
- **PEACEMAN, D.W.** Interpretation of Well-Block Pressures in Numerical Reservoir Simulation. *paper SPE 6893, presented at the SPE-AIME 52nd Annual Fall Technical Conference and Exhibition,* 09 Octobre 1977
- **PEACEMAN, D.W.** Interpretation of Well-Block Pressures in Numerical Reservoir Simulation With Nonsquare Grid Blocks and Anisotropic Permeability. *paper SPE 10528, presented at the 1982 SPE Symposium on Reservoir Simulation,* 31 Janvier 1982
- **PEACEMAN, D.W.** Interpretation of Wellblock Pressures in Numerical Reservoir Simulation: Part3 - Off-Center and Multiple Wells Within a Wellblock. *paper SPE 16976, presented at the 1987 SPE Annual Technical Conference and Exhibition,* 27 Septembre 1987